# EUROPÄISCHE PATENTANMELDUNG

(11) **EP 4 786 318 A1**
(43) Veröffentlichungstag der Anmeldung: **05.08.2026**
(21) Anmeldenummer: 26154555.2
(22) Anmeldetag: 27.01.2026
(51) Int. Cl.: B62J 1/18, B62J 1/20, B62J 1/22

(54) **FAHRRADSATTELHÜLLE UND FAHRRADSATTEL MIT EINER SOLCHEN FAHRRADSATTELHÜLLE**

(30) Priorität: 04.02.2025 DE 202025100556 U
(71) Anmelder: everve GmbH & Co. KG, 72461 Albstadt (DE)
(72) Erfinder: WOLFER, Andreas, 72461 Albstadt (DE); WOLFER, Stephan, 72461 Albstadt (DE)
(74) Vertreter: Kuhnen & Wacker Patent- und Rechtsanwaltsbüro PartG mbB

(57) **Zusammenfassung**

Die vorliegende Erfindung betrifft eine Fahrradsattelhülle (16) zum Anbringen an einer Fahrradsattelschale (16) mit einer Auflagefläche und Verbindungsbereichen (19, 21). Um die Fahrradsattelhülle leichter austauschen zu können und dennoch sicherer verhindert wird, dass sie sich ungewollt von der Sattelschale löst, ist die erfindungsgemäße Fahrradsattelhülle (16) dadurch gekennzeichnet, dass ein vorderer Verbindungbereich (19) dafür eingerichtet und ausgebildet ist, dass eine Sattelnase (18) der Fahrradsattelschale (15) in Längsrichtung eingeschoben wird, und ein hinterer Verbindungsbereich (21) dafür eingerichtet und ausgebildet ist, über eine der Sattelnase (18) gegenüberliegenden, rückwärtigen Kante (20) der Sattelschale (15) gestülpt zu werden, nachdem die Sattelnase (18) in den vorderen Verbindungsbereich (19) eingeschoben ist. Ferner betrifft die vorliegende Erfindung einen Fahrradsattel mit einer solchen Fahrradsattelhülle (16).

## Beschreibung

Die vorliegende Erfindung betrifft eine Fahrradsattelhülle zum Anbringen an einer Fahrradsattelschale mit einer Auflagefläche und Verbindungsbereichen sowie einen Fahrradsattel mit einer solchen Fahrradsattelhülle.

Eine solche Fahrradsattelhülle und ein solcher Fahrradsattel sind aus der EP 3 907 125 A1 bekannt. Der Fahrradsattel weist ein Fahrradsattelgestell aus Streben auf, mittels dessen der Fahrradsattel an einem Fahrradsattelhalter am Fahrrad befestigt werden kann. Das Fahrradsattelgestell trägt eine Fahrradsattelschale (nachfolgend kurz Sattelschale genannt), welche meistens mit dem Fahrradsattelgestell geklebt, verschraubt oder genietet ist. Das Fahrradsattelgestell und die Fahrradsattelschale sind bei modernen Fahrrädern für den sportlichen High-End-Bereich aus kohlefaserverstärktem Kunststoff hergestellt. Sie können aber auch aus einem anderen Kunststoff oder Metall, z.B. Aluminium, hergestellt sein. Dabei müssen die Fahrradsattelschale und das Fahrradsattelgestell nicht notwendigerweise aus dem gleichen Material hergestellt werden.

Die Fahrradsattelhülle, nachfolgend kurz Sattelhüllen genannt, wird an der Sattelschale lösbar befestigt und bildet so eine gepolsterte Auflage. Je nach gewünschtem Härtegrad der Polsterung, z.B. aufgrund unterschiedlicher Fahrsituationen oder Vorlieben eines Radfahrenden, kann der Radfahrende die Sattelhülle tauschen. Dabei umgreift die Sattelhülle nach der eingangs genannte EP 3 907 125 A1 die Sattelschale an ihrem gesamten Umfang. Dadurch lässt sich die Hülle nur schwer auf die Sattelschale aufziehen. Dennoch besteht die Gefahr, dass sie je nach Fahrsituation ungewollt von der Sattelschale abrutscht.

Hiervon ausgehend liegt der Erfindung das Problem zugrunde, eine Fahrradsattelhülle und einen Fahrradsattel der eingangs genannten Art derart weiterzubilden, dass sich die Fahrradsattelhülle leichter austauschen lässt und dennoch sicherer verhindert wird, dass sie sich ungewollt von der Sattelschale löst.

Zur Lösung dieses Problems ist die erfindungsgemäße Fahrradsattelhülle dadurch gekennzeichnet, dass ein vorderer Verbindungbereich dafür eingerichtet und ausgebildet ist, dass eine Sattelnase der Fahrradsattelschale in Längsrichtung eingeschoben wird, und ein hinterer Verbindungsbereich dafür eingerichtet und ausgebildet ist, über eine der Sattelnase gegenüberliegenden, rückwärtigen Kante der Sattelschale gestülpt zu werden, nachdem die Sattelnase in den vorderen Verbindungsbereich eingeschoben ist.

Um die Sattelhülle an der Sattelschale anzubringen, wird die Sattelnase in den vorderen Verbindungsbereich eingeschoben und dann der hintere Verbindungsbereich über die hinter Kante der Sattelschale gestülpt. Anhand von Prototypen konnte bestätigt werden, dass sich die Sattelhülle sehr einfach und vor allem ohne Werkzeug mit der Sattelschale verbinden und auch wieder von ihr lösen lässt. Dennoch sitzt die Sattelhülle bei allen erprobten Fahrsituationen sicher auf der Sattelschale ohne sich ungewollt zu lösen.

Nach einer konstruktiven Ausgestaltung der Erfindung ist der vordere Verbindungsbereich taschenartig ausgebildet. Der vordere Verbindungsbereich umschließt dadurch die Sattelnase, was ein ungewolltes Lösen der Sattelhülle von der Sattelschale noch besser verhindert.

Der vordere Verbindungsbereich kann dabei an seiner Unterseite eine Öffnung aufweisen. Dadurch wird er elastischer, was das Aufziehen der Sattelhülle auf die Sattelschale weiter erleichtert. Nach hinten sollte die Öffnung durch einen Steg begrenzt sein, so dass der Verbindungsbereich die Sattelnase dennoch komplett umschließt. Dieses hilft, ein ungewolltes Lösen der Sattelhülle von der Sattelschale zu verhindern.

Auch an dem hinteren Verbindungsbereich kann eine Öffnung im Bereich der Längsmittelachse der Sattelschale vorgesehen sein, was wieder die Elastizität erhöht und so das Aufziehen der Sattelhülle erleichtert. Die Öffnung sollte dabei in eine Längsvertiefung, die sich bei einigen Sattelhüllen entlang der Längsmittelachse erstreckt, übergehen. Dieses ist optisch besonders ansprechend.

Bei der Sattelhülle gemäß der eingangs genannte EP 3 907 125 A1 ist das Polsterelement integraler Bestandteil der Sattelhülle. Es kann daher nicht ausgetauscht werden, z.B. um ein verschlissenes ("durchgesessenes") Polsterelement auszutauschen oder gegen ein Polsterelement mit einer anderen Härte beispielsweise zur Anpassung an eine andere Fahrsituation auszutauschen.

Zur Vermeidung dieses Nachteils weist die Sattelhülle nach einem auch unabhängig denkbaren Aspekt der Erfindung wenigstens eine Tasche an der Auflagefläche auf, welche dafür eingerichtet und ausgebildet ist, ein Polsterelement aufzunehmen. Dadurch könne vorhandene Polsterelemente aus der wenigstens einen Tasche entnommen und durch je ein anderes Polsterelement ersetzt werde. Hierdurch können nicht nur "durchgesessene" Polsterelemente ausgetauscht werden, sondern auch ein vorhandenes Polsterelement entnommen und durch ein anderes Polsterelement ersetzt werden. Da die Polsterelemente vergleichsweise klein sind, können sie z.B. bei mehrtägigen Radtouren leicht mitgenommen und je nach Anforderung einer Etappe ausgetauscht werden. Der Härtegrad der Sattelhülle lässt sich so auf einfache Weise an unterschiedliche Fahrsituationen oder Bedürfnisse des Radfahrenden anpassen. Dazu ist die wenigstens eine Tasche vorzugsweise im Gesäßknochenbereich angeordnet. Besonders bevorzugt sind je eine Tasche zu beiden Seiten der Längsmittelachse des Fahrradsattels angeordnet. Hierdurch werden die Gesäßknochen des Radfahrenden optimal unterstützt.

Damit das Polsterelement nicht ungewollte aus der zugehörigen wenigstens einen Tasche fällt, solange die Sattelhülle nicht auf die Sattelschale aufgezogen ist, weist die wenigstens eine Tasche nach einer Weiterbildung Hinterschneidung auf. Diese sind dafür eingerichtet und ausgebildet, das zugehörige Polsterelement zumindest vorläufig zu halten.

Die Erfindung wird nachfolgend anhand eines in der Zeichnung dargestellten Ausführungsbeispiels näher erläutert. In der Zeichnung zeigen:
- Fig. 1: eine Fahrradsattel mit einer Sattelhülle mit den Erfindungsmerkmalen in Unteransicht,
- Fig. 2: den Fahrradsattel gemäß Fig. 1 in Draufsicht,

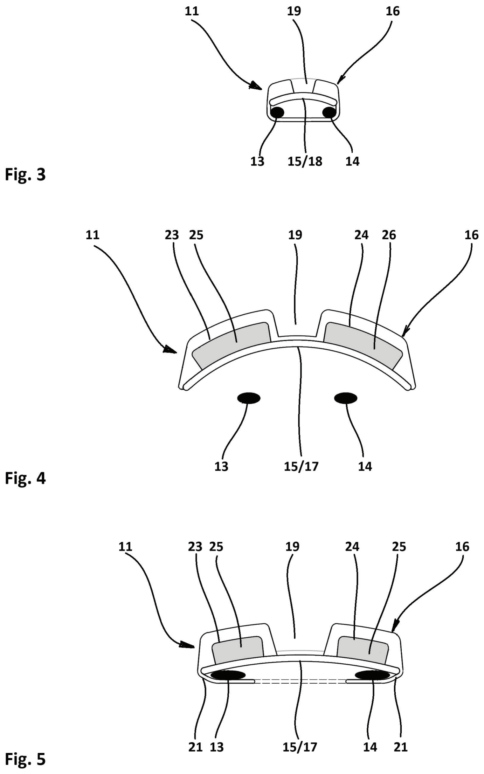

- Fig. 3: den Fahrradsattel im Querschnitt in der Ebene III-III gemäß Fig. 1 und 2,
- Fig. 4: den Fahrradsattel im Querschnitt in der Ebene IV-IV gemäß Fig. 1 und 2,
- Fig. 5: den Fahrradsattel im Querschnitt in der Ebene V-V gemäß Fig. 1 und 2.

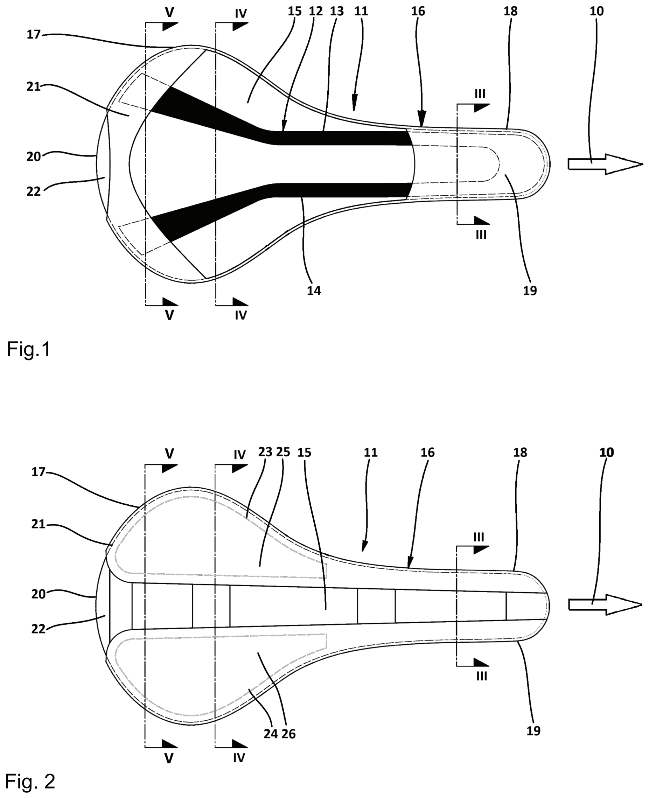

Wenn im Rahmen dieser Offenbarung von "vorn" "vorderer", "hinten", "hintere" oder "rückwärtige" gesprochen wird, wird von der Blickrichtung eines Radfahrenden in der normalen Fahrtrichtung eines Fahrrads ausgegangen, wie durch den Pfeil 10 in Fig. 1 und 2 angegeben.

Dargestellt ist ein Fahrradsattel 11 mit einem Sattelgestell 12 aus Streben 13, 14, einer Sattelschale 15 und einer Sattelhülle 16. Das Sattelgestell 12 ist in geeigneter Weise mit der Sattelschale 15 verbunden, z.B. geklebt, genietet oder verschraubt. Das Sattelgestell 12 und die Sattelschale 15 sind im vorliegenden Fall aus kohlefaserverstärktem Kunststoff (CFK) hergestellt. Sie können aber auch aus anderen Kunststoffen oder Metall, z.B. Aluminium, hergestellt sein. Das Sattelgestell 12 und die Sattelschale 15 können dabei uns dem gleichen oder unterschiedlichen Materialien hergestellt sein.

Der Fahrradsattel 11 und mit ihm die Sattelschale 15 und die Sattelhülle 16 weisen einen hinteren Gesäßknochenbereich 17, welcher die Gesäßknochen eines Radfahrenden abstützt und welcher sich nach vorn verjüngt und so in eine vordere Sattelnase 18 übergeht.

Die Sattelhülle 16 weist zwei Verbindungsbereich auf, nämlich im Bereich der Sattelnase 18 einen als Tasche 19 ausgebildeten vorderen Verbindungsbereich und an der der Sattelnase 18 gegenüberliegenden, hinteren Kante 20 der Sattelschale 15, konkret des Gesäßknochenbereichs 17 einen hinteren Verbindungsbereich 21. Um die Sattelhülle 16 an der Sattelschale 15 anzubringen, wird zunächst die Sattelnase 18 der Sattelschale 15 in die Tasche 19 der Sattelhülle eingeführt bzw. die Tasche 19 über die Sattelnase 18 geschoben. Sodann kann der hintere Verbindungsbereich 21 über die hintere Kante 20 der Sattelschale 15 gestülpt werden. Die Sattelhülle 16 ist nun an wenigstens drei Punkten, nämlich einerseits durch die Tasche 19 sowie andererseits durch den linken Abschnitt des hinteren Verbindungsbereichs 21 und den rechten Abschnitt des hinteren Verbindungsbereichs 21 mit der Sattelschale 15 verbunden. Diese Verbindung ist so fest, dass auch unter extremen Fahrbedingungen ein ungewolltes Lösen oder Verrutschen der Sattelhülle 16 auf der Sattelschale 15 verhindert ist. Jedoch lässt sich die Sattelhülle 16 gut von der Sattelschale 15 lösen, indem zunächst der hintere Verbindungsbereich 21 von der Sattelschale 15 gelöst wird und dann die Sattelhülle 16 nach vorn geschoben wird, bis die Tasche 19 die Sattelnase 18 freigibt.

Wie aus Figur 1 ersichtlich, weist die Tasche 19 im vorliegenden Fall eine geschlossene Unterseite auf. Vorzugsweise ist hier jedoch eine Öffnung in Form von z.B. einem Langloch vorgesehen. Dieses Langloch wäre dann nach hinten durch einen Steg begrenzt. Dieses erhöht die Elastizität der Tasche 19 und erleichtert damit das Aufschieben und Abnehmen der Tasche 19 von der Sattelnase 18.

Auch der hintere Verbindungsbereich 21 kann, wie in Figur 1 und Figur 2 erkennbar, eine Öffnung 22 aufweisen. Dadurch wird wiederum die Elastizität des hinteren Verbindungsbereichs 21 erhöht und so das Aufziehen bzw. Abnehmen der Sattelhülle 16 weiter erleichtert. Wie ebenfalls in Figur 1 und Figur 2 gut zu erkennen ist, geht die Öffnung 22 in eine in Längsrichtung der Sattelhöhle 16 verlaufende Vertiefung 27 über.

Nach einem auch unabhängig denkbaren Aspekt der vorliegenden Erfindung weist die Sattelhülle 16 an ihrer im aufgezogenen Zustand der Sattelschale 15 zugewandten Unterseite, welche eine Auflagefläche für die Sattelhülle 16 auf der Sattelschale 15 bildet, wenigstens eine Tasche im Gesäßknochenbereich 17 auf. Konkret sind zwei Taschen 23, 24 zu beiden Seiten einer Längsmittelachse des Fahrradsattels 11 vorgesehen. Diese Taschen 23, 24 dienen dazu, je ein Polsterelement 25, 26 aufzunehmen. Die Taschen 23, 24 weisen vorzugsweise jeweils Hinterschneidungen auf, durch welche die Polsterelemente 25, 26 zumindest vorläufig in der jeweiligen Tasche 23, 24 gehalten werden, solange die Sattelhülle 16 nicht auf die Sattelschale 15 aufgezogen ist. Durch diese Maßnahme lassen sich die Polsterelemente 25, 26 auf einfache Weise aus der zugehörigen Tasche 23, 24 entnehmen und durch Polsterelemente 25, 26 anderer Härte ersetzen. Dadurch lässt sich die Sattelhülle 16 auf einfache Weise an unterschiedliche Fahrsituationen oder Bedürfnisse des Radfahrenden anpassen.

### Bezugszeichenliste:

- 10: Fahrtrichtung
- 11: Fahrradsattel
- 12: (Fahrrad-)Sattelgestell
- 13: Strebe
- 14: Strebe
- 15: (Fahrrad-)Sattelschale
- 16: (Fahrrad-)Sattelhülle
- 17: Gesäßknochenbereich
- 18: Sattelnase
- 19: Tasche
- 20: Kante
- 21: Hinterer Verbindungsbereich
- 22: Öffnung
- 23: Tasche
- 24: Tasche
- 25: Polsterelement
- 26: Polsterelement
- 27: Vertiefung

## Patentansprüche

1. Fahrradsattelhülle (16) zum Anbringen an einer Fahrradsattelschale (16) mit einer Auflagefläche und Verbindungsbereichen (19, 21), **dadurch gekennzeichnet, dass** ein vorderer Verbindungbereich (19) dafür eingerichtet und ausgebildet ist, dass eine Sattelnase (18) der Fahrradsattelschale (15) in Längsrichtung eingeschoben wird, und ein hinterer Verbindungsbereich (21) dafür eingerichtet und ausgebildet ist, über eine der Sattelnase (18) gegenüberliegenden, rückwärtigen Kante (20) der Sattelschale (15) gestülpt zu werden, nachdem die Sattelnase (18) in den vorderen Verbindungsbereich (19) eingeschoben ist.

2. Fahrradsattelhülle (16) nach Anspruch 1, **dadurch gekennzeichnet, dass** der vordere Verbindungsbereich (19) als Tasche ausgebildet ist.

3. Fahrradsattelhülle (16) nach Anspruch 2, **dadurch gekennzeichnet, dass** der vordere Verbindungsbereich (19) eine Öffnung an seiner Unterseite aufweist.

4. Fahrradsattelhülle (16) nach Anspruch 3, **dadurch gekennzeichnet, dass** die Öffnung nach hinten durch einen Steg begrenzt ist.

5. Fahrradsattelhülle (16) nach einem der Ansprüche 1 bis 4, **dadurch gekennzeichnet, dass** der hintere Verbindungsbereich (21) im Bereich der Längsmittelachse der Fahrradsattelschale (15) gesehen eine Öffnung (22) aufweist.

6. Fahrradsattelhülle (16) nach Anspruch 5, **dadurch gekennzeichnet, dass** die Öffnung (22) des hinteren Verbindungsbereichs (21) in eine Längsvertiefung (27) (23, 24) der Fahrradsattelhülle (16) übergeht.

7. Fahrradsattelhülle (16) nach einem der Ansprüche 1 bis 6, **gekennzeichnet durch** wenigstens eine Tasche (23, 24) an der Auflagefläche, welche dafür eingerichtet und ausgebildet ist, ein Polsterelement (25, 26) aufzunehmen.

8. Fahrradsattelhülle (16) nach Anspruch 7, **dadurch gekennzeichnet, dass** die wenigstens eine Tasche (23, 24) in einem Gesäßknochenbereich (17) angeordnet ist.

9. Fahrradsattelhülle (16) nach Anspruch 7 oder 8, **gekennzeichnet durch** zwei Taschen (23, 24), von denen jeweils eine Tasche (23, 24) seitlich der Längsmittelachse angeordnet ist.

10. Fahrradsattelschale (16) nach einem der Ansprüche 7 bis 9, **dadurch gekennzeichnet, dass** die wenigstens eine Tasche (23, 24) eine Hinterschneidung aufweist.

11. Fahrradsattel (11) mit einer Fahrradsattelschale (15) und einer Fahrradsattelhülle (16) nach einem der Ansprüche 1 bis 10.
